# EUROPÄISCHE PATENTSCHRIFT

(11) **EP 0 492 206 B1**
(45) Veröffentlichungstag und Bekanntmachung des Hinweises auf die Patenterteilung: **13.09.1995**
(21) Anmeldenummer: 91120915.3
(22) Anmeldetag: 05.12.1991
(51) Int. Cl.: G02B 6/44

(54) **Optisches Kabel mit einer Vielzahl von Lichtwellenleitern**
Optical cable with a plurality of light waveguides
Câble optique ayant guides d'onde lumineuses multiples

(30) Priorität: 19.12.1990 DE 4040712
(43) Veröffentlichungstag der Anmeldung: 01.07.1992
(73) Patentinhaber: SIEMENS AKTIENGESELLSCHAFT, 80333 München (DE)
(72) Erfinder: Zeidler, Günter, Dr.phil.nat., W-8034 Germering (DE)

(56) Entgegenhaltungen:
- EP-A- 0 394 618
- DE-A- 2 930 643
- DE-B- 2 449 439
- DE-C- 3 937 695

## Beschreibung

Die Erfindung betrifft ein optisches Kabel mit einer Vielzahl von Lichtwellenleitern, die jeweils gruppenweise zu Bändchen zusammengefaßt sind, wobei mehrere derartige Bändchen jeweils einen Bändchenstapel bilden, der in einer Kammer eines Kernelementes angeordnet ist. Ein solches Kabel ist beispielsweise aus der EP-A- 394 618 bekannt.

Aus der EP-A1 0 356 786 ist ein optisches Kabel bekannt, bei dem ein mit etwa rechteckförmigen Kammern versehenes Kernelement vorgesehen ist. Derartige, auch als Kammerkabel bezeichnete Strukturen werden vielfach zusammen mit Bandleitungen eingesetzt, d.h. es sind mehrere Lichtwellenleiter zu einem Bändchen mit etwa rechteckförmigen Querschnitt zusammengefaßt. Mehrere derartige Bändchen werden zu einem Bändchenstapel vereinigt, wobei dieser Stapel an die jeweils etwa rechteckförmig ausgebildete Kammer durch seine ebenfalls rechteckförmig ausgebildete Außenkontur angepaßt ist. Innerhalb der Kammer ist lediglich ein kleiner Spalt gelassen, um eine gewisse Beweglichkeit des Bändchenstapels zu gewährleisten, wobei jedoch verhindert werden soll, daß es zu einem Positionswechsel, d.h. zu einer Verdrehung oder einem Umkippen des Bändchenstapels kommen kann.

Mit zunehmender Anzahl von Bändchen innerhalb eines Stapels werden die Trennwände zwischen den einzelnen Kammern nach außen hin immer breiter und erhalten einen etwa keilförmigen Querschnitts. Dieser hier vorhandene Raum ist gemäß der EP-A1 0 356 786 in gewissen Umfang so nutzbar, daß dort nach außen offene zusätzliche Vertiefungen angebracht werden (mit etwa dreiecksförmigen Querschnitt), die für andere Zwecke, beispielsweise für die Anbringung elektrischer Leiter oder dergleichen nutzbar sind. Für die Einfügung weiterer Lichtwellenleiter, z. B. in Form von Bändchenstapeln sind diese Querschnitte jedoch nicht geeignet, weil sie zum einen relativ klein sind und zum anderen im wesentlichen eine dreiecksförmige Gestalt aufweisen.

Aus der DE-PS 24 49 439 ist es bereits bekannt, Kammerkabel derart auszugestalten, daß die Kammern nach außen hin sich erweitern, also etwa eine sektorförmige Struktur aufweisen. In diesem Fall werden jedoch die Lichtwellenleiter als Einzelelemente, d.h. nicht zu Bändchen oder zu Stapeln zusammengefaßt, eingelegt.

Bei sehr hohen Faserzahlen führt ein Aufbau mit Lichtwellenleiterbändchen zu unnötig großen Kabeldurchmessern, weil der Raum im Bereich des Kernelementes nicht ausreichend gut ausgenützt wird. Der Erfindung liegt die Aufgabe zugrunde, einen Weg aufzuzeigen auf dem es möglich ist, den vorhandenen Raum möglichst gut auszunützen oder anders ausgedrückt, innerhalb eines gegebenen Raumes möglichst viele Lichtwellenleiterbändchen unterzubringen und dadurch eine hohe Übertragungskapazität zu realisieren. Gemäß der Erfindung, welches sich auf ein optisches Kabel der eingangs genannten Art bezieht, wird diese Aufgabe durch die Merkmale des Anspruchs 1 gelöst. Ein Merkmal besteht darin daß der Bändchenstapel jeweils in radialer Richtung von innen nach außen gesehen, eine derart zunehmende Anzahl von Lichtwellenleitern aufweist, daß der von den Trennwänden begrenzte Kammerraum möglichst weitgehend gefüllt ist.

Durch die Erfindung ist es somit möglich, den Vorteil von Bändchenstrukturen (leichte Identifizierbarkeit, einfache Verbindungstechnik, gedrängter Aufbau) beizubehalten und gleichzeitig den zur Verfügung stehenden Raum weitgehend zu nutzen. Bei gleichem Außendurchmessers des optischen Kabels kann somit eine vergrößerte Faserzahl gegenüber den bisher beim Einsatz von Bändchenstapeln üblichen rechteckförmigen Kammern realisiert werden. Umgekehrt ergibt sich bei gleicher Zahl von Lichtwellenleitern innerhalb des Kabels gegenüber dem bekannten, mit rechteckförmig ausgebildeten Kammern arbeitenden Strukturen ein geringerer Außendurchmesser des Kabels und damit ein geringerer Materialaufwand und eine bessere Bieg- und Verlegbarkeit.

Die Erfindung und ihre Weiterbildungen werden nachfolgend anhand von Zeichnungen näher erläutert.

Es zeigen:
- Fig. 1: im Querschnitt den Aufbau eines erfindungsgemäßen optischen Kabels und
- Fig. 2: eine Abwandlung des Ausführungsbeispiels nach Fig. 1.

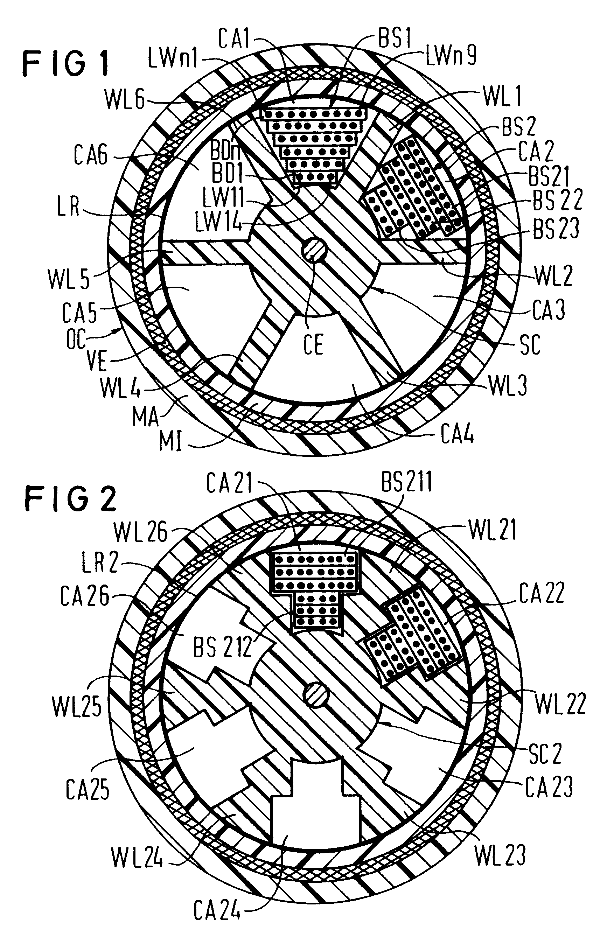

Das optische Kabel OC nach Fig. 1 weist im Kern ein Zentralelement CE auf, das aus hochzugfesten Material besteht. Auf dieses Zentralelement CE ist ein Kernelement SC aufgebracht, vorzugsweise aufextrudiert, das im vorliegenden Beispiel 6 radial nach außen ragende Trennwände WL1-WL6 aufweist. Diese Trennwände sind so gestaltet, daß sie im wesentlichen etwa von innen nach außen verlaufend gleiche Wandstärke aufweisen, so daß Kammern CA1-CA6 entstehen, die etwa sektorförmigen Querschnitt haben und somit sich nach außen hin verbreitern. Die Kammern CA1-CA6 verlaufen in Längsrichtung gesehen helixförmig um das Zentralelement CE herum.

Die Kammern CA1-CA6 werden durch eine Bespinnung oder Bewicklung LR nach außen hin verschlossen, nachdem die Lichtwellenleiter-Bändchen eingelegt worden sind. Nach außen hin erfolgt in bekannter Weise, z.B. ein erster innerer Mantel MI aus Kunststoffmaterial, gegebenenfalls eine Verstärkungslage (z.B. aus hochfesten Aramidgarnen) VE und ein aufextrudierter Außenmantel MA. Weiterhin können hier nicht dargestellte Diffusionssperren gegen das Eindringen von Wasserdampf vorgesehen sein.

Die Lichtwellenleiter sind in Form von etwa rechteckigen Querschnitt aufweisenden Bändchenstrukturen angeordnet, wobei in der Kammer CA1n derartige Lichtwellenleiterbändchen BD1-BDn übereinandergestapelt sind und die Stapelrichtung etwa radial verläuft. Im vorliegenden Beispiel ist angenommen, daß das innere Bändchen BD1 vier Lichtwellenleiter LW11-LW14 aufweist, während das äußerste Bändchen BDn neun Lichtwellenleiter LWn1-LWn8 enthält. Im vorliegenden Beispiel ist angenommen, daß sechs derartige Bändchen (n = 6) übereinander gestapelt sind, von denen jedes jeweils nach außen hin einen Lichtwellenleiter mehr enthält als das weiter innen liegende. Auf diese Weise ist sichergestellt, daß eine optimale und praktisch vollständige Ausnutzung des zur Verfügung stehenden Raumes der Kammer CA1 durch den Bändchenstapel BS erreicht wird.

Der verbleibende äußere Spalt (zwischen Bändchenstapel BS und Kammerwandung) innerhalb der Kammer CA1 sollte so klein gewählt werden, daß die Lichtwellenleiterbändchen BD1-BDn des Bändchenstapels BS1 sich zwar innerhalb der Kammer CA1 gleitend bewegen können, daß aber kein Positionswechsel oder kein Umschlagen eines Bändchens eintreten kann. Dies ist notwendig, damit beim Biegen der Kabel die Lichtwellenleiterbändchen in ihrer dargestellten, etwa tangential verlaufenden Lage verbleiben, weil auf diese Weise ein besonders schonendes Verarbeiten der Bändchen und eine entsprechend schonende Verlegung des fertigen Kabels möglich ist.

Es ist in manchen Fällen zweckmäßig, die verbleibenden seitlichen Spalte und auch einen etwaigen Spalt gegenüber der Bewicklung LR, z.B. durch ein Gleitmittel, ein gegebenenfalls bei Wasserzutritt quellendes Pulver oder eine weiche Öle und gegebenenfalls ein Thixotropierungsmittel enthaltende Füllmasse zu verschließen.

Bei der für die Kammer CA1 vorgesehene Bändchenstruktur ist es notwendig, eine sehr große Anzahl mit unterschiedlichen Lichtwellenleitern versehenen Bändchen BD1-BDn bereitzustellen. Sollte dies unerwünscht sein, kann entsprechend der für die Kammer CA2 dargestellten Struktur verfahren werden, wobei der dortige Bändchenstapel BS2 insgesamt aus drei Teilstapeln BS21, BS22 und BS23 zusammengesetzt ist. Der innerste Teilstapel BS23 enthält zwei Bändchen mit jeweils vier Lichtwellenleitern, der nachfolgende Teilstapel BS22 enthält zwei Bändchen mit jeweils acht Lichtwellenleitern und der äußerste Teilstapel BS23 enthält zwei Bändchen mit jeweils zehn Lichtwellenleitern. Gegenüber der Ausführungsform, wie sie für die Kammer CA1 gezeichnet ist, werden dementsprechend nur noch halb so viele Bändchentypen benötigt, nämlich insgesamt drei (gegenüber sechs bei der Kammer CA1).

Insbesondere wenn größere Anzahlen von Bändchen je Stapel vorgesehen sind, d.h. mehr als zwei oder drei je Stapel BS21-BS23, dann kann es zweckmäßig sein, die Struktur der Trennwände WL1-WL6 an die Struktur der jeweiligen Teilstapel anzupassen. Ein Ausführungsbeispiel hierfür ist in Fig. 2 gezeigt, bei der das Kernelement SC2 derart ausgestaltet ist, daß die Trennwände WL21 und WL26 gestuft ausgebildet sind, d.h. zwischen sich jeweils etwa rechteckförmige Teilkammern freilassen. Die Wandstärke im innersten Teil der Kammer ist dabei, ebenso wie bei dem Ausführungsbeispiel nach Fig. 1 so gewählt, daß die jeweilige Wandung im Bereich des Kammergrundes gerade noch eine ausreichende Stärke hat. Die Wandstärke sollte Werte zwischen 1 und 2 mm an der dünnsten Stelle nicht unterschreiten. In der ersten rechteckigen Teilkammer zwischen den Wandungen WL26 und WL21 ist der Teilstapel BS212 untergebracht, der aus drei Bändchen mit jeweils vier Lichtwellenleitern besteht. Weiter außen ist in der zweiten äußeren, ebenfalls etwa rechteckförmigen Teilkammer der zweite Teilstapel BS211 angeordnet, der ebenfalls aus drei Lichtwellenleiterbändchen besteht, von denen jedes acht Lichtwellenleiter enthält. Die etwa winkligen dreieckförmigen Teilausschnitte aus den Wandungen WL26 und WL21 ergeben eine besonders gute Führung und zusätzliche Lagerung für die Lichtwellenleiterbändchen vor allem Dingen des äußeren Stapels BS211. Die beschriebene Struktur kann bis außen hin (d.h. zum Kammerende) fortgesetzt werden, d.h. es lassen sich fortlaufend in mehreren Stufen oder Treppen Einschnitte in die Stufen oder Treppen Einschnitte in die Trennwände WL21 und WL22 vorsehen, wobei jeweils nach außen hin ein weiterer Teilstapel mit stufenförmig zunehmender Zahl von Lichtwellenleitern angeordnet werden kann.

Die Zahlenbeispiele sind hinsichtlich der Zahl der Bändchen als auch hinsichtlich der Zahl der Lichtwellenleiter nur als angenommene Werte zur Verdeutlichung des Prinzips der Erfindung zu verstehen. Sie können beliebig abgewandelt werden.

In der Praxis werden alle Kammern gleich groß gewählt und in jeder Kammer wird die gleiche Art von Bändchenstapel untergebracht.

## Patentansprüche

1. Optisches Kabel (OC) mit einer Vielzahl von Lichtwellenleitern, die jeweils gruppenweise zu Bändchen (BD1-BDn) zusammengefaßt sind, wobei mehrere derartige Bändchen jeweils einen Bändchenstapel bilden, der in einer Kammer (CA1-CA6) eines Kernelementes (SC) angeordnet ist,
**dadurch gekennzeichnet,**
daß die Kammer Trennwände (WL1-WL6) aufweist, die so gestaltet sind, daß sich die Kammer nach außen him verbreitest, und daß der Bändchenstapel (BS; BS1, BS2, BS3) in radialer Richtung von innen nach außen gesehen, eine derart zunehmende Anzahl von Lichtwellenleitern aufweist, daß der von den Trennwänden (WL1-WL6) begrenzte Kammerraum möglichst weitgehend gefüllt ist.

2. Optisches Kabel nach Anspruch 1,
**dadurch gekennzeichnet,**
daß die Bändchenstapel an die Form der Trennwände derart angepaßt sind, daß außen jeweils nur ein derart schmaler Spalt bleibt, daß zwar eine Längsbewegung aber keine Verdrehung der Bändchenstapel möglich ist.

3. Optisches Kabel nach Anspruch 1 oder 2,
**dadurch gekennzeichnet,**
daß die Zunahme der Anzahl der Lichtwellenleiter innerhalb des Bändchenstapels stetig erfolgt.

4. Optisches Kabel nach Anspruch 1 oder 2,
**dadurch gekennzeichnet,**
daß die Zunahme der Anzahl der Lichtwellenleiter in Stufen derart erfolgt, daß mehrere Bändchen mit jeweils gleicher Zahl von Lichtwellenleitern zu einem Teil-Stapel zusammengefaßt sind.

5. Optisches Kabel nach Anspruch 4,
**dadurch gekennzeichnet,**
daß mindestens zwei Bändchenstapel (BS21, BS22, BS23) vorgesehen, die mehrere Bändchen mit jeweils gleicher Anzahl von Lichtwellenleitern innerhalb eines Bändchens aufweisen derart, daß weiter außen die Bändchen mit der größeren Anzahl von Lichtwellenleiter und weiter innen die Bändchen mit der kleineren Anzahl von Lichtwellenleitern zu liegen kommen.

6. Optisches Kabel nach einem der vorhergehenden Ansprüche,
**dadurch gekennzeichnet,**
daß die Trennwände in radialer Richtung gesehen im wesentlichen gleiche Wandstärke aufweisen.

7. Optisches Kabel nach einem der Ansprüche 3 bis 5,
**dadurch gekennzeichnet,**
daß die Trennwände (WL5, WL6) gestuft derart ausgebildet sind, daß zwischen ihnen jeweils etwa rechteckförmig ausgebildete freie Kammerbereiche entstehen, die zur Aufnahme von ebenfalls entsprechend Bändchenstapeln im wesentlichen dienen.

## Claims

1. Optical cable (OC) with a multiplicity of optical waveguides, which are respectively combined in groups to form ribbons (BD1-BDn), a plurality of such ribbons respectively forming a ribbon stack, which is arranged in a chamber (CA1-CA6) of a core element (SC), characterized in that the chamber has partitions (WL1-WL6) which are configured such that the chamber broadens towards the outside, and in that the ribbon stack (BS; BS1, BS2, BS3), seen in the radial direction from the inside towards the outside, has a number of optical waveguides increasing in such a manner that the chamber space bounded by the partitions (WL1-WL6) is filled to the greatest possible extent.

2. Optical cable according to Claim 1, characterized in that the ribbon stacks are matched to the shape of the partitions in such a manner that on the outside in each case only a narrow gap remains such that although a longitudinal movement of the ribbon stacks is possible, no rotation of the ribbon stacks is possible.

3. Optical cable according to Claim 1 or 2, characterized in that the increase of the number of the optical waveguides within the ribbon stack takes place continuously.

4. Optical cable according to Claim 1 or 2, characterized in that the increase of the number of the optical waveguides is carried out in stages such that a plurality of ribbons having in each case the same number of optical waveguides are combined to form a partial stack.

5. Optical cable according to Claim 4, characterized in that at least two ribbon stacks (BS21, BS22, BS23) are provided, which have a plurality of ribbons with in each case the same number of optical waveguides within one ribbon such that the ribbons with the larger number of optical waveguides come to lie further outside and the ribbons with the smaller number of optical waveguides come to lie further inside.

6. Optical cable according to one of the preceding claims, characterized in that the partitions, seen in the radial direction, have essentially the same wall thickness.

7. Optical cable according to one of Claims 3 to 5, characterized in that the partitions (WL5, WL6) are of stepped design such that between them in each case free chamber regions of approximately rectangular design are produced, which are essentially used for the accommodation of likewise corresponding ribbon stacks.

## Revendications

1. Câble optique (OC) comprenant une pluralité de fibres optiques, qui sont rassemblées par groupes en bandelettes (BO1 à BOn), plusieurs bandelettes de ce genre formant un empilement de bandelettes, qui est disposé dans une chambre (CA1 à CA6) d'un élément formant âme (SC), caractérisé en ce que la chambre comprend des cloisons (WL1 à WL6), qui ont une forme telle que la chambre s'élargit vers l'extérieur et en ce que l'empilement de bandelettes (BS,BS1, BS2,BS3) comprend, vue dans une direction radiale de l'intérieur vers l'extérieur, un nombre croissant de fibres optiques, de sorte que la zone de la chambre qui est délimitée par les cloisons (WL1 à WL6) soit remplie autant que possible dans une grande mesure.

2. Câble optique (OC) selon la revendication 1, caractérisé en ce que les empilements de bandelettes sont adaptés à la forme des cloisons de manière à ne laisser subsister à l'extérieur qu'une fente d'une étroitesse telle qu'un mouvement dans le sens de la longueur est certes possible pour l'empilement de bandelettes, mais pas une rotation.

3. Câble optique selon la revendication 1 ou 2, caractérisé en ce que l'augmentation du nombre de fibres optiques au sein de l'empilement de bandelettes est constant.

4. Câble optique selon la revendication 1 ou 2, caractérisé en ce que l'augmentation du nombre de fibres optiques a lieu par degré, de sorte que plusieurs bandelettes ayant chacune un même nombre de fibres optiques sont rassemblées en un empilement partiel.

5. Câble optique selon la revendication 4, caractérisé en ce qu'il est prévu au moins deux empilements de bandelettes (BS21,BS22,BS23), qui comprennent plusieurs bandelettes ayant chacune le même nombre de fibres optiques au sein d'une bandelette de sorte que les bandelettes ayant le plus grand nombre de fibres optiques sont le plus à l'extérieur et les bandelettes ayant le plus petit nombre de fibres optiques le plus à l'intérieur.

6. Câble optique selon l'une des revendications précédentes, caractérisé en ce que les cloisons ont sensiblement la même épaisseur selon une direction radiale.

7. Câble optique selon l'une des revendications 3 à 5, caractérisé en ce que les cloisons (WL5, WL6) ont une forme de gradin, de sorte qu'il apparaît entre chacune d'elles des zones de chambre libre de forme à peu près rectangulaire, qui servent essentiellement à recevoir des empilements de bandelettes correspondants.
